# EUROPEAN PATENT APPLICATION

(11) **EP 1 862 825 A1**
(43) Date of publication of application: **05.12.2007**
(21) Application number: 06729956.0
(22) Date of filing: 24.03.2006
(51) Int. Cl.: G02B 1/00

(54) **LIGHT TRANSMITTING BODY AND OPTICAL INTERCONNECTION SYSTEM**

(30) Priority: 24.03.2005 JP 2005085857
(71) Applicant: The Furukawa Electric Co., Ltd., Chiyoda-ku, Tokyo 100-8322 (JP)
(72) Inventor: SAKO, Akifumi, c/o The Furukawa Electric Co., Ltd., Chiyoda-ku, Tokyo 100-8322 (JP); KOYANAGI, Takuya, c/o The Furukawa Electric Co., Ltd., Chiyoda-ku, Tokyo 100-8322 (JP); SUGIZAKI, Ryuichi, c/o The Furukawa Electric Co., Ltd., Chiyoda-ku, Tokyo 100-8322 (JP); YAGI, Takeshi, c/o The Furukawa Electric Co., Ltd., Chiyoda-ku, Tokyo 100-8322 (JP)
(74) Representative: Schwabe - Sandmair - Marx
(86) International application number: PCT/JP2006/306008
(87) International publication number: WO 2006/101204

(57) **Abstract**

An optical transmission medium according to the present invention includes an optical fiber (10) that is made of silica glass. The optical fiber (10) includes a core (12) having a graded-index refractive index profile and a cladding (13) formed around the core (12). The optical fiber (10) is bent by equal to or more than a quarter turn with a curvature radius equal to or larger than 4 mm and equal to or smaller than 10 mm. With this scheme, an optical transmission medium including a GI optical fiber that is capable of making a wiring in a narrow space, such as a wiring in a device, easy, and capable of improving an optical communication bandwidth is provided.

## Description

### TECHNICAL FIELD

The present invention relates to an optical transmission medium used for an optical wiring system in a device or for optical wiring in a device.

### BACKGROUND ART

There are two methods for transmitting signals in a device, i.e., an electrical transmission system and an optical interconnection (optical wiring) system. With the recent increase of a CPU clock frequency, a crosstalk occurs due to high-density wiring and a need for waveshaping technique and the like arise in the electrical transmission system, limiting the transmission rate to about 1 Gbps over 1 m. On the other hand, the optical interconnection system can transmit signals in a far broader bandwidth with a compact size and a low power consumption compared with the electrical transmission system. Therefore, in recent years, an attention has been directed to the optical interconnection system as an alternative technique for the electrical transmission system. The optical interconnection includes a system using an optical waveguide circuit and a system using an optical fiber. All optical parts used in a device are desirably stored in a small space as much as possible. Therefore, optical fibers that can be used for flexible wiring, and that realizes optical communication with low loss, are considered as one of the optical parts suitable for the optical interconnection.

A multimode optical fiber (MMF) is often used as an optical fiber for short-distance optical transmission. Normally, the MMF has a diameter about 10 times larger the diameter of a singlemode optical fiber (SMF). The MMF has a large numerical aperture. Thus, high precision alignment is not needed for connecting the MMF to optical parts such as a light source with low loss unlike the SMF, enabling easy connection. Particularly, many research reports have been made for the optical communication method in which an LED or a vertical cavity surface emitting laser (VCSEL) having an oscillation wavelength of 850 nm is used as a light source, and a graded-index optical fiber (hereinafter, "silica GI optical fiber"), which is a type of the multimode optical fiber, is used as an optical transmission medium. The silica GI optical fiber is optimized in terms of refractive index profile so that influence of mode dispersion is suppressed, and is often used for short-distance optical communication.

A core diameter of the silica GI optical fiber is defined to be 50±3 µm by the ITU-T (International Telecommunication Union Telecommunication Standard Sector) G.651. The silica GI optical fiber with its refractive index profile precisely controlled can realize high speed optical communication with a transmission rate of 10 Gbps over a distance equal to or longer than 100 m (e.g., see Non-Patent Document 1).

Non-Patent Document 1: Hatakeyama Ichiro, et al., "High-speed optical interconnections using system LSI module with optical I/O interfaces", Optical and Electro-Optical Engineering Contact, Vol. 42, No. 8 (2004)

### DISCLOSURE OF INVENTION

### PROBLEM TO BE SOLVED BY THE INVENTION

When an optical fiber is used for wiring in a device, bending portions with extremely small curvature radiuses are considered to be formed at many places in the device. When an optical wiring system in a device is designed, a small bending of up to about 1 turn with a curvature radius of about 5 mm is considered to be formed (In the specification, "turn" is used for counting a degree of bending at a portion (bending portion) where a bending is formed. For example, 1 turn refers to a state where an optical fiber is turned by 1 rotation with a certain bending radius, 1/4 turn refers to a state where an optical fiber changes the direction by 90 degrees at one bending portion, and 1/2 turn refers to a state where an optical fiber changes the direction by 180 degrees at one bending portion.). Thus, it is necessary to consider an influence of the bending on the transmission rate and the mechanical reliability.

The present invention has been made in consideration of the above aspect. A first object of the present invention is to provide an optical transmission medium including a GI optical fiber that is capable of making wiring in a narrow space, such as wiring in a device, easy, and capable of improving an optical communication bandwidth. A second object of the present invention is to provide an optical transmission medium including an optical fiber ribbon formed with the GI optical fiber. A third object of the present invention is to provide an optical interconnection system employing the above optical transmission media.

### MEANS FOR SOLVING PROBLEM

To solve the above problems and to achieve the object, an optical transmission medium according to the present invention includes a GI optical fiber that is made of silica glass, and includes a core having a GI refractive index profile and a cladding formed around the core. The GI optical fiber is bent by equal to or more than a quarter turn with a curvature radius equal to or larger than 4 mm and equal to or smaller than 10 mm.

Furthermore, according to the present invention, the GI optical fiber has a core diameter equal to or larger than 47 µm and equal to or smaller than 53 µm and a cladding outer diameter equal to or larger than 70 µm and equal to or smaller than 100 µm.

Moreover, an optical transmission medium according to the present invention includes a GI optical fiber that is made of silica glass, and includes a core having a GI refractive index profile and a cladding formed around the core. The GI optical fiber is bent by equal to or more than one turn with a curvature radius equal to or larger than 4 mm and equal to or smaller than 10 mm.

Furthermore, according to the present invention, the GI optical fiber has a core diameter equal to or larger than 47 µm and equal to or smaller than 53 µm and a cladding outer diameter equal to or larger than 80 µm and equal to or smaller than 90 µm.

Moreover, according to the present invention, the GI optical fiber includes a coating thereon made of at least one of an ultraviolet curing resin and a thermal curing resin, a difference between an outer diameter of the coating and a cladding outer diameter is equal to or larger than 20 µm, and the outer diameter of the coating is equal to or smaller than 150 µm.

Furthermore, according to the present invention, the ultraviolet curing resin and the thermal curing resin have flame resistance.

Moreover, an optical transmission medium according to the present invention includes an optical fiber ribbon formed by joining a plurality of GI optical fibers arranged in parallel. The GI optical fibers are made of silica glass, and include a core having a GI refractive index profile and a cladding formed around the core. The GI optical fibers are bent by equal to or more than a quarter turn with a curvature radius equal to or larger than 4 mm and equal to or smaller than 10 mm.

Furthermore, according to the present invention, the optical fiber ribbon is formed by joining the GI optical fibers arranged in parallel at pitches equal to or larger than 100 µm and equal to or smaller than 150 µm.

Moreover, according to the present invention, the optical fiber ribbon includes a ribbon coating thereon made of at least one of an ultraviolet curing resin and a thermal curing resin.

Furthermore, an optical interconnection system according to the present invention includes a GI optical fiber that is made of silica glass, and includes a core having a GI refractive index profile and a cladding formed around the core. The GI optical fiber is bent by equal to or more than a quarter turn with a curvature radius equal to or larger than 4 mm and equal to or smaller than 10 mm. An optical signal with a communication wavelength of 850 nm propagates through the GI optical fiber.

Moreover, an optical interconnection system according to the present invention includes an optical fiber ribbon formed by joining a plurality of GI optical fibers arranged in parallel. The GI optical fibers are made of silica glass, and include a core having a GI refractive index profile and a cladding formed around the core. The GI optical fibers are bent by equal to or more than a quarter turn with a curvature radius equal to or larger than 4 mm and equal to or smaller than 10 mm. An optical signal with a communication wavelength of 850 nm propagates through the GI optical fiber.

### EFFECT OF THE INVENTION

According to the present invention, an optical transmission medium including a GI optical fiber that is capable of making a wiring in a narrow space, such as a wiring in a device, easy, and capable of improving an optical communication bandwidth can be provided. Furthermore, an optical transmission medium including an optical fiber ribbon formed with the GI optical fiber can be provided. Moreover, an optical interconnection system employing the above optical transmission media can be provided. Therefore, it is possible to realize a high-speed optical interconnection.

### BRIEF DESCRIPTION OF DRAWINGS

[Fig. 1] Fig. 1 is a graph of a bandwidth change (850 nm) when a silica GI optical fiber (with a core diameter of 50 µm is bent with a curvature radius of 5 mm.
[Fig. 2] Fig. 2 is a graph of a relation between a cladding diameter and a macro-bending loss (850 nm) when the silica GI optical fiber is bent with a curvature radius of 5 mm.
[Fig. 3] Fig. 3 is a graph of a change in failure rate (curvature radius is 5 mm) when the cladding diameter is made small.
[Fig. 4] Fig. 4 is a graph of a bandwidth change and a macro-bending loss change (i.e., macro-bending loss which is caused when the optical fiber is bent by 1 turn with a curvature radius of 5 mm), when a coating diameter of the optical fiber having a cladding with a diameter of 80 µm is changed.
[Fig. 5] Fig. 5 is a lateral cross section of a thinned silica GI optical fiber in Example 1 having a coating with a diameter of 125 µm.
[Fig. 6] Fig. 6 is a graph of a result of measuring BER of the thinned silica GI optical fiber in Example 1, which is obtained when the thinned silica GI optical fiber is bent by 1 turn with a curvature radius of 5 mm and an optical signal with a wavelength of 850 nm is modulated at 10 Gbps.
[Fig. 7] Fig. 7 is a lateral cross section of a twelve-core thinned optical fiber ribbon manufactured on a trial basis in Example 2.
[Fig. 8] Fig. 8 is a perspective view of an example of a 850-nm bandwidth optical interconnection system construction manufactured on a trial basis in Example 5 and Example 6, in which the optical fiber is bent by 1/4 turn.
[Fig. 9] Fig. 9 is a perspective view of an example of the 850-nm bandwidth optical interconnection system construction manufactured on a trial basis in Example 5, in which the optical fiber is bent by 1/4 turn.

### EXPLANATIONS OF LETTERS OR NUMERALS

- 1: LSI
- 2: Electrical wiring
- 3: Driver IC
- 4: VCSEL
- 5: Coating resin for optical fiber ribbon
- 6: Connector connecting portion
- 7: Backplane
- 8: Printed board
- 9: PD
- 10: Optical fiber
- 11: Core
- 12: Cladding
- 13: Coating resin
- 20: thin-twelve-core silica GI flame-resistant optical fiber ribbon

### BEST MODE(S) FOR CARRYING OUT THE INVENTION

Exemplary embodiments of an optical transmission medium according to the present invention are explained in detail below with reference to the accompanying drawings. Note that the present invention is not limited to the embodiments. Hereinafter, an outline and features of an optical fiber used in the optical transmission medium of the present invention are explained in the embodiments, and then examples related to an optical interconnection system using the optical transmission medium of the present invention are explained.

### [Embodiments]

In the optical transmission medium of the embodiments, a silica GI optical fiber is bent by a predetermined amount so that higher-order modes are eliminated, thereby decreasing an influence of the mode dispersion and improving a communication bandwidth. In addition, the silica GI optical fiber is reduced in cladding diameter, so that probability of breaking of the silica GI optical fiber upon application of bending stress is lowered, whereby wiring flexibility is improved.

When an optical fiber is used in an optical interconnection, the optical fiber is bent with extremely small curvature radiuses at many places in a device. Disturbances such as bending in the silica GI optical fiber cause a macro-bending loss or mode conversion.

The 0.85-µm band silica GI optical fiber has more than 200 modes. Many higher-order modes have electric field distributions even near a cladding region, and have low effective indexes. Therefore, when the optical fiber is bent, light cannot be confined to a waveguide, which causes the macro-bending loss.

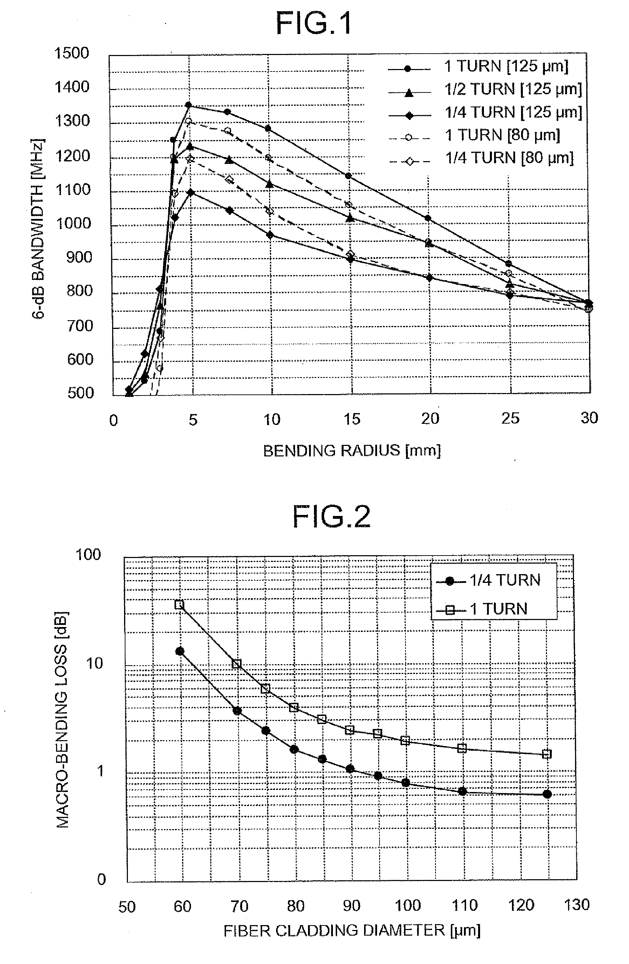

On the other hand, there are concerns that the mode dispersion becomes large and an effective bandwidth decreases when the mode conversion occurs. Fig. 1 shows a change in bandwidth when a typical silica GI optical fiber having a cladding diameter of 125 µm and a coating diameter of 250 µm is actually bent. The horizontal axis shown in Fig. 1 represents a bending radius, and the vertical axis represents a 6-dB bandwidth at a wavelength of 850 nm. Specifically, Fig. 1 shows the 6-dB bandwidth with respect to the bending radius when the silica GI optical fiber is bent by 1/4 turn, 1/2 turn, and 1 turn. In the specification, the "bandwidth" and the "core diameter" refer to the "bandwidth" and the "core diameter" defined by the ITU-T G.651. As for the rest of terminologies not specifically defined in the specification, the definition and the measurement method by the ITU-T G.651 are applied. Fig. 1 indicates that the effective bandwidth can be improved as the curvature radius becomes smaller until it reaches about 5 mm, and that the effective bandwidth can be improved until the curvature radius reaches 4 mm. The reason for the above effect is as follows. When the silica GI optical fiber is bent with a curvature radius equal to or larger than 4 mm, the effective bandwidth due to the mode conversion or the mode coupling to higher-order modes does not decrease while light in the higher-order modes are radiated to cause a radiation loss by the bending of the optical fiber. In this manner, the same effect as that of the underfilled launch condition can be obtained by bending the silica GI optical fiber. For this reason, to improve the communication bandwidth, it is effective to bend the silica GI optical fiber with a curvature radius equal to or larger than 4 mm although a transmission loss occurs. However, when the silica GI optical fiber is bent with a curvature radius smaller than 4 mm, the communication bandwidth drastically decreases. This is because, when the silica GI optical fiber is bent with a curvature radius smaller than 4 mm, many propagating modes are disturbed due to the bending, which decreases the effective bandwidth. When the amount of the bending was changed from 1/4 turn to 1 turn, it was confirmed that a larger bending amount offers a great effect of improving the bandwidth. On the other hand, when the silica GI optical fiber is bent by 1 turn or more, no greater improvement in the bandwidth was recognized. This is because, although the higher-order modes, which are easily influenced by the bending, can be reduced by increasing the amount of the bending, the bandwidth cannot be improved in a state where most of the higher-order modes have already been eliminated.

Fig. 1 shows a change in bandwidth when the silica GI optical fiber is thinned to have a cladding diameter of 80 µm and a coating diameter of 250 µm. Fig. 1 indicates that, as in the case of the typical optical fiber having a cladding diameter of 125 µm, the communication bandwidth can be improved when the thinned silica GI optical fiber is bent to have a curvature radius equal to or larger than 4 mm.

On the other hand, when the cladding diameter is made small, the influence of side pressure imposed on the core region becomes large, which increases the influence of disturbance due to the bending. Fig. 2 is a graph of a relation between the cladding diameter and the macro-bending loss (850 nm) when the silica GI optical fiber is bent by 1 turn with a curvature radius of 5 mm. The coating diameter of the silica GI optical fiber is 250 µm. Fig. 2 indicates that the macro-bending loss tends to become larger as the cladding diameter becomes smaller. Because a silica GI optical fiber has many higher-order modes with low effective indexes, light of higher-order modes cannot be confined to an optical fiber with a thin cladding layer. Thus, many higher-order modes are radiated at bending portions, causing the macro-bending loss. For example, it is assumed that the silica GI optical fiber is bent by 1 turn with a curvature radius of 5 mm when a system is constructed. When the cladding diameter is 125 µm, the macro-bending loss is about 1 dB. Meanwhile, the macro-bending loss is about 4 dB when the cladding diameter is 80 µm, and the macro-bending loss is about 40 dB when the cladding diameter is 60 µm. Considering the link loss budget in an optical interconnection system construction, the macro-bending loss allowable at optical fiber transmission parts is about 5 dB at the maximum. Accordingly, it is difficult to construct a high-speed optical interconnection system with an optical fiber having a cladding diameter equal to or smaller than 80 µm.
Assuming that the silica GI optical fiber is bent by 1/4 turn with a curvature radius of 5 mm, the macro-bending loss is not large compared with the case of 1-turn bending. However, when the cladding diameter is smaller than 70 µm, the macro-bending loss exceeds 5 dB. Thus, assuming the system in which the optical fiber is bent by 1/4 turn with a curvature radius of 5 mm, the cladding diameter needs to be equal to or larger than 70 µm.

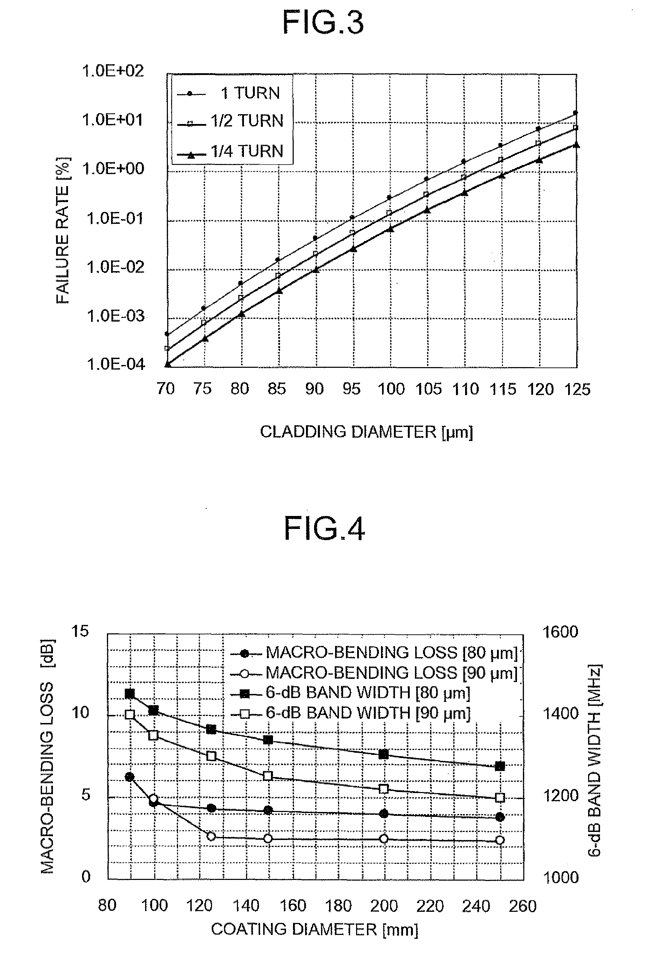

It is known that a silica optical fiber with a larger cladding diameter causes larger distortion when the optical fiber is bent, thus increasing the probability of breaking of the optical fiber. The probability of breaking is calculated by simulation for each of the cases of bending the optical fiber by 1/4 turn, 1/2 turn, and 1 turn, with a curvature radius of 5 mm. The relation between the probability of breaking and the cladding diameter is shown in Fig. 3. The calculation is made with the screening level of 1.5%, and the fatigue parameter with respect to the coating material of 18. Considering the system design, the failure rate is preferably 0.1%. Assuming that the optical fiber is bent by about 1 turn with a curvature radius of about 5 mm, the failure rate is equal to or larger than 10% when the cladding diameter is 125 µm, Thus, the optical fiber is unusable. However, when the cladding diameter is 90 µm, the failure rate is 0.06%, which meets the requirement of the system. Thus, the maximum cladding diameter is considered to be 90 µm. Assuming that the optical fiber is bent by about 1/4 turn with a curvature radius of 5 mm, the failure rate can be equal to or smaller than 0.1% if the cladding diameter is equal to or smaller than 100 µm. In view of the occurrence of the macro-bending loss, there is not a strong demand for reducing the probability of breaking of the typical optical fiber. However, assuming that the optical fiber is bent with a small diameter as in the case of the optical interconnection, it has a significant meaning to reduce the probability of breaking of the optical fiber under a small diameter bending like the above case. Furthermore, reduction in the cladding diameter is desirable in view of storing the optical fiber in a small space.

When optical fibers are used for the optical interconnection, the optical fibers can be bundled to form an optical fiber ribbon, whereby a multi-channel optical transmission medium is obtained for performing high-speed optical communication. The specification of the typical silica GI optical fiber is as follows: the cladding diameter is 125 µm, and the coating outer diameter is 250 µm. Generally, an optical fiber ribbon is formed by connecting a plurality of the optical fibers arranged in parallel with pitches of 250 µm. In the thinned optical fiber with the cladding diameter of 80 µm, the coating diameter is also reduced, so that it is possible to manufacture an optical fiber ribbon including the optical fibers arranged at pitches narrower than those of the conventional optical fiber ribbons. The optical fiber ribbon, which includes the thinned optical fibers arranged at narrow pitches, is an optical part suitable for the optical interconnection because the optical fiber ribbon has higher interconnection flexibility and thus can be stored in a small space.

However, when the coating layer of the optical fiber is thinned, the influence of the lateral pressure to the optical fiber becomes large, which can increase the macro-bending loss. In addition, when the coating layer of the silica GI optical fiber is thinned, the communication bandwidth is likely to degrade because of the presence of the many higher-order modes, which are easily influenced by disturbances. When the length of the optical fiber to be used is short, the influence of the degradation on these optical properties is small. Thus, the degradation of these optical properties can be acceptable depending upon the length of the optical fiber to be used determined by the system design.

Fig. 4 shows the relation between the macro-bending loss and the bandwidth when the coating outer diameters of the optical fibers with cladding diameters of 80 µm and 90 µm are changed. The macro-bending loss represented in Fig. 4 is a loss caused when the optical fiber is bent by 1 turn with a curvature radius of 5 mm, and the communication bandwidth represented in Fig. 4 is a value of 6-dB bandwidth in a wavelength of 850 nm.

The coating layer also has a function of protecting the optical fiber from surface damage, therefore, the coating layer is required to have a thickness equal to or larger than 10 µm. On the other hand, a larger thickness of the coating layer has no influence on the optical properties; however, the coating diameter is preferably equal to or smaller than 150 µm in view of storing the optical fiber in a small space. Fig. 4 indicates that the macro-bending loss starts to increase when the coating outer diameter is 90 µm in the optical fiber with a cladding diameter of 80 µm, and starts to increase when the coating outer diameter is 100 µm in the optical fiber with a cladding diameter of 90 µm. Thus, it is clear that the coating diameter can be made small as long as the difference between the coating outer diameter and the cladding outer diameter is equal to 10 µm or more in both cases and that the difference between the coating outer diameter and the cladding outer diameter is preferably equal to or larger than 20 µm. Regarding the bandwidth, the higher-order modes tend to be easily converted into radiation modes as the coating layer becomes thinner. Consequently, the bandwidth improves as the coating layer becomes thinner. The effect of the above coating layer can be obtained in either of coating layers having a single layer structure and a multi layer structure.

### (Example 1)

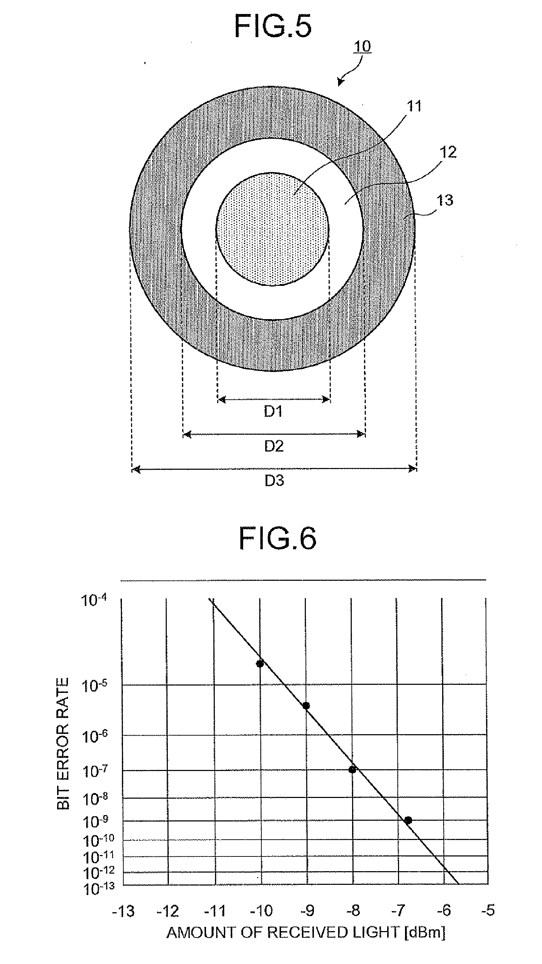

A silica GI optical fiber 10 shown in Fig. 5 was manufactured. The silica GI optical fiber 10 includes a core 11 having a diameter D1 of 50 µm, a cladding 12 having a diameter D2 of 80 µm, and a coating resin 13 having an outer diameter D3 of 125 µm. The evaluation was performed for transmission properties of the optical fiber 10 at a time of direct modulation at 10 Gbps under the following conditions. The silica GI optical fiber 10 was bent by 1 turn with a curvature radius of 5 mm, and the VCSEL having an oscillation wavelength of 850 nm was used as a light source. The result of measuring BER (Bit Error Rate) in the transmission experiment is represented in Fig. 6. In the state where the optical fiber 10 was bent by 1 turn, the amount of received light was -7 dBm, and the BER was about 10⁻⁹. Thus, it was confirmed that the optical transmission at 10 Gbps is performed with no problem. When the optical fiber was bent by 1/4 turn, the BER was almost the same as that in the case of the 1 turn bending at the same light receiving power. It is considered that this result was obtained because there is not much difference between the effects of improving the bandwidth in the cases of the 1/4 turn bending and the 1 turn bending.

### (Example 2)

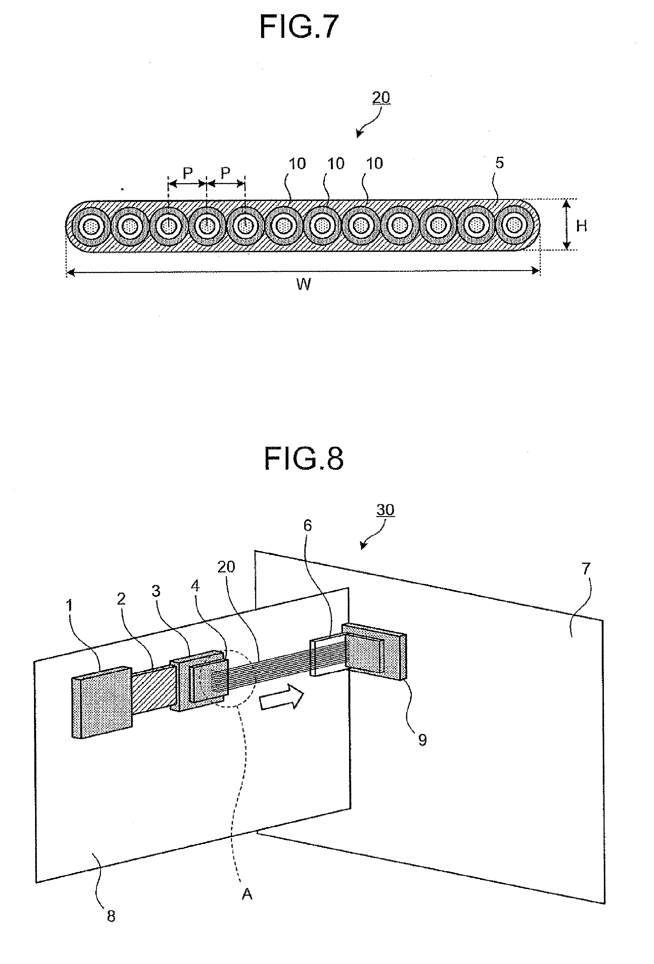

As shown in Fig. 7, 12 silica GI optical fibers 10 of Example 1 were arrayed in parallel at pitches P of 125 µm, and were covered with a coating resin 5 to join the silica GI optical fibers 10, thereby manufacturing a thin-twelve-core silica GI optical fiber ribbon 20, that is a twelve-core thinned silica GI optical ribbon. In view of both factors of the space saving and the amount of loss increase due to the thinned coating resin 21, a coating diameter H (thickness H) was set to 125 µm. The optical fiber ribbon 20 in which the pitches P were set to 125 µm has the half size of the conventional optical fiber ribbons, so that the optical fiber ribbon 20 has extremely high flexibility and can be stored in a small space in a device. An ultraviolet curing resin is used as a material for the coating resin 5.
The pitch P can be reduced to 100 µm if the silica GI optical fibers 10 each have the diameter D1 of the core 11 of 50 µm, the diameter D2 of the cladding 12 of 80 µm, and the difference between the coating outer diameter and the cladding diameter of 20 µm. On the other hand, in view of storing the optical fiber ribbon in a small space, the pitch P is preferably equal to or smaller than 150 µm.

The finished dimension of the optical fiber ribbon 20 was as follows: a width W is 1.55 mm, and the thickness H is 0.17 mm. The VCSELs as light sources to be connected to the optical fiber ribbon are arrayed in 12 channels at pitches of 125 µm, so that it is possible to collectively connect the VCSELs to the optical fiber ribbon 20 manufactured. With this configuration, the VCSELs are directly modulated, so that ultrahigh-speed optical communication at over 100 Gbps can be realized.

### (Example 3)

In Example 3, a flame-retardant ultraviolet curing urethane acrylate resin was used as the ultraviolet curing resin for a material of the coating resin 5 to manufacture a flame-retardant fiber ribbon. The flame-retardant ultraviolet curing urethane acrylate resin used in Example 3 was manufactured by adding, to the resin, a halogen additive such as bromine and chlorine and an antimony compound such as antimonous oxide and triphenylantimony; a metal hydride such as aluminum hydroxide and magnesium hydroxide; or a phosphorus compound such as phosphate ester, or by halogenating a prepolymer or an acrylic polymer composing the ultraviolet curing resin with bromine or chlorine and adding phosphorus. Flame resistance of the ultraviolet curing resin was examined. Specially, the method of adding a brominated flame-resistant agent was effective in view of the flame resistance.

The flame resistance was obtained by changing the compositions of the ultraviolet curing resin. The reason thereof is that products produced by decomposition reaction cover the surface of the resin, or cracked gas produced when the ultraviolet curing resin is burned forms a shield layer between the ultraviolet curing resin and air. In addition, it is also considered that radicals generated from a halogen-containing compound prevent continuous burning, or the resin is cross-linked and forms a three-dimensional structure.

A 60-degree inclination flame test according to the JIS Standard C3005 was conducted for evaluation of the optical fiber ribbon obtained by using the ultraviolet curing urethane acrylate resin containing the brominated flame retardants as the ultraviolet curing resin for an optical fiber ribbon. As a result, flame ignited on the optical fiber was naturally extinguished in about 3.2 seconds on average, which satisfies the JIS Standard.

### (Example 4)

It was confirmed that high flame resistance can be obtained by using the flame-retardant ultraviolet curing resin for both of the optical fiber coating resin and the ribbon coating resin. As a result, the optical, fiber ribbon, which is obtained by using the ultraviolet curing urethane acrylate resin containing the brominated flame-resistant agent for the optical fiber coating resin and the ribbon coating resin, exhibited the highest flame resistance. In the 60 degree inclination flame test according to JIS Standard C3005, flame ignited on the optical fiber was spontaneously extinguished in about 2.6 seconds on average, which satisfies the JIS Standard.

As a result of a vertical flame test according to UL1581 Standard, flame was spontaneously extinguished in 5.7 seconds on average, and there was no dropping occurred during burning of the optical fiber, which satisfies the UL Standard. As a result of the vertical flame test according to UL1581 Standard on an optical fiber, flame was spontaneously extinguished in 7.6 seconds on average. Thus, even the optical fiber only exhibited sufficient flame resistance.

### (Example 5)

A 0.85-µm band optical interconnection system 30 shown in Fig. 8 was constructed. A printed board 8 shown in Fig. 8 is vertically arranged while being supported on one side by one surface of a backplane 7. A VCSEL 4 and an LSI 1 mounted on a driver IC 3 are provided on the printed board 8. The LSI 1 and the VCSEL 4 are electrically connected via an electrical wiring 2. A PD 9 is provided on the backplane 7. The optical fiber ribbon 20 is bent at approximately a right angle with a curvature radius of about 5 mm at the coupling portion to the VCSEL 4 to form a bending portion A of 1/4 turn bending. The optical fiber ribbon 20 is then wired along the backplane 7 to reach the PD 9 on the backplane 7.

A silica GI optical fiber ribbon having a cladding diameter of 80 µm and a coating outer diameter of 125 µm was used for the optical fiber ribbon 20.

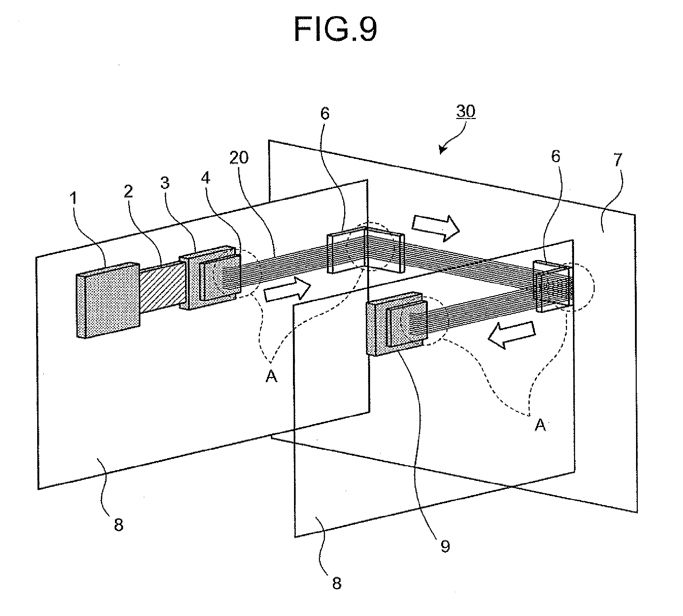

Examination was made of a change of a transmission rate due to the provision of the bending portion A in the optical fiber ribbon 20, using the device shown in Fig. 8. For comparison, examination was also made of the transmission rate in a case in which an optical fiber ribbon after being coupled to the VCSEL 4 was connected to the PD 9 without providing the bending portion A with a curvature radius equal to or smaller than 5 mm. As a result, modulation at the maximum speed of 6.8 Gbps was possible in the case of providing no bending portion. Meanwhile, when the system was constructed with provision of the bending portion A, high-speed transmission at the maximum rate of 10.6 Gbps was realized. In the 0.85-µm band optical interconnection system 30 shown in Fig. 9, the optical fiber ribbon 20 was bent by 1/4 turn at four places with a curvature radius of about 5 mm, i.e., the optical fiber ribbon 20 is bent by 1 turn in total. In this case also, the transmission properties similar to those in the case of the 1/4 bending shown in Fig. 8 was obtained.

This system realizes high-speed signal processing utilizing the optical communication technique, and realizes an optical transmission rate equal to or larger than 10 Gbps, which is difficult to be realized by electrical signals at present. Gigabit-scale optical transmission can be performed even in a state where the optical fiber is not bent. However, the communication bandwidth can be further improved by using the optical transmission medium, in which the silica GI optical fiber is bent, such as the optical transmission medium in the embodiments, which can realize a high-speed optical interconnection. In addition, the cladding diameter is made small, so that the probability of breaking of the optical fiber due to bending is reduced.

### (Example 6)

A 0.85-µm band optical interconnection system was constructed with the same components as those of Example 5 shown in Fig. 8 except that a different optical fiber ribbon was used. A silica GI optical fiber ribbon having a cladding diameter of 125 µm and a coating outer diameter of 250 µm was used for the optical fiber ribbon 20 in Example 6. For wiring, the optical fiber was bent by about 1/4 turn with a curvature radius of 7.5 mm. The failure rate of the optical fiber due to breaking thereof at the bending portion A was about 0.07%, which indicates that the probability of breaking is almost the same as that in the case where the optical fiber ribbon including the silica GI optical fibers, each having a cladding diameter of 90 µm, was bent by 1 turn with a curvature radius of 5 mm.

Similarly to Example 5, experiments were made of the optical fiber ribbon 20 for both cases of with and without the bending portion A for comparison. When the bending portion A was not provided, modulation at the maximum speed of 5.1 Gbps was possible. On the other hand, when the bending portion A was provided, high-speed transmission at the maximum speed of 7.5 Gbps was realized.

This system realizes high-speed signal processing utilizing the optical communication technique, and realizes an optical transmission rate equal to or larger than 10 Gbps, which is difficult to be realized by electrical signals at present. Gigabit-scale optical transmission can be performed even in a state where the optical fiber is not bent. However, the communication bandwidth can be further improved by using the optical transmission medium, in which the silica GI optical fiber is bent, such as the optical transmission medium in the embodiments, which can realize a high-speed optical interconnection.

### INDUSTRIAL APPLICABILITY

As described above, the optical transmission medium including the GI optical fiber and the optical fiber ribbon according to the present invention is suitable for drawing an optical fiber in a limited space, for example, for the optical interconnection, and particularly, suitable for an optical fiber for optical wiring in a device.

## Claims

1. An optical transmission medium comprising:
a graded-index optical fiber that is made of silica glass, and includes a core having a graded-index refractive index profile and a cladding formed around the core, wherein
the graded-index optical fiber is bent by equal to or more than a quarter turn with a curvature radius equal to or larger than 4 mm and equal to or smaller than 10 mm.

2. The optical transmission medium according to claim 1, wherein the graded-index optical fiber has a core diameter equal to or larger than 47 µm and equal to or smaller than 53 µm and a cladding outer diameter equal to or larger than 70 µm and equal to or smaller than 100 µm.

3. An optical transmission medium comprising:
a graded-index optical fiber that is made of silica glass, and includes a core having a graded-index refractive index profile and a cladding formed around the core, wherein
the graded-index optical fiber is bent by equal to or more than one turn with a curvature radius equal to or larger than 4 mm and equal to or smaller than 10 mm.

4. The optical transmission medium according to claim 2, wherein the graded-index optical fiber has a core diameter equal to or larger than 47 µm and equal to or smaller than 53 µm and a cladding outer diameter equal to or larger than 80 µm and equal to or smaller than 90 µm.

5. The optical transmission medium according to any one of claims 1 to 4, wherein
the graded-index optical fiber includes a coating thereon made of at least one of an ultraviolet curing resin and a thermal curing resin,
a difference between an outer diameter of the coating and a cladding outer diameter is equal to or larger than 20 µm, and
the outer diameter of the coating is equal to or smaller than 150 µm.

6. The optical transmission medium according to claim 5, wherein the ultraviolet curing resin and the thermal curing resin have flame resistance.

7. An optical transmission medium comprising:
an optical fiber ribbon formed by joining a plurality of graded-index optical fibers arranged in parallel, wherein
the graded-index optical fibers are made of silica glass, and include a core having a graded-index refractive index profile and a cladding formed around the core, and
the graded-index optical fibers are bent by equal to or more than a quarter turn with a curvature radius equal to or larger than 4 mm and equal to or smaller than 10 mm.

8. The optical transmission medium according to claim 7, wherein the optical fiber ribbon is formed by joining the graded-index optical fibers arranged in parallel at pitches equal to or larger than 100 µm and equal to or smaller than 150 µm.

9. The optical transmission medium according to claim 7 or 8, wherein the optical fiber ribbon includes a ribbon coating thereon made of at least one of an ultraviolet curing resin and a thermal curing resin.

10. An optical interconnection system comprising:
a graded-index optical fiber that is made of silica glass, and includes a core having a graded-index refractive index profile and a cladding formed around the core, wherein
the graded-index optical fiber is bent by equal to or more than a quarter turn with a curvature radius equal to or larger than 4 mm and equal to or smaller than 10 mm, and
an optical signal with a communication wavelength of 850 nm propagates through the graded-index optical fiber.

11. An optical interconnection system comprising:
an optical fiber ribbon formed by joining a plurality of graded-index optical fibers arranged in parallel, wherein
the graded-index optical fibers are made of silica glass, and include a core having a graded-index refractive index profile and a cladding formed around the core,
the graded-index optical fibers are bent by equal to or more than a quarter turn with a curvature radius equal to or larger than 4 mm and equal to or smaller than 10 mm, and
an optical signal with a communication wavelength of 850 nm propagates through the graded-index optical fiber.
